Europäisches Patentamt

European Patent Office

Office européen des brevets

(11) Veröffentlichungsnummer: **0 285 958 B1**

(12) **EUROPÄISCHE PATENTSCHRIFT**

(45) Veröffentlichungstag der Patentschrift: **09.09.92**

(21) Anmeldenummer: **88105004.1**

(22) Anmeldetag: **28.03.88**

(51) Int. Cl.5: **B62L 3/02**, B60T 11/16, B62L 1/10, B62L 1/00

(54) **Fahrradbremse.**

(30) Priorität: **04.04.87 DE 3711477**
**15.04.87 DE 3712734**

(43) Veröffentlichungstag der Anmeldung:
**12.10.88 Patentblatt 88/41**

(45) Bekanntmachung des Hinweises auf die Patenterteilung:
**09.09.92 Patentblatt 92/37**

(84) Benannte Vertragsstaaten:
**AT BE CH DE FR GB IT LI NL**

(56) Entgegenhaltungen:
CH-A- 581 556        FR-A- 2 341 463
GB-A- 700 591        GB-A- 745 061
US-A- 3 032 997      US-A- 4 391 353
US-A- 4 665 803

(73) Patentinhaber: **Pellyfren AG**
**Gründenstrasse 82**
**CH-8247 Flurlingen(CH)**

(72) Erfinder: **Süle, Sandor**
**Hüttenlebenweg 42**
**CH-8240 Thayngen(CH)**

(74) Vertreter: **Hiebsch, Gerhard F., Dipl.-Ing. et al**
**Hiebsch & Peege Patentanwälte Postfach**
**464 Erzbergerstrasse 5a**
**W-7700 Singen 1(DE)**

EP 0 285 958 B1

## Beschreibung

Die Erfindung betrifft eine Fahrradbremse nach dem Oberbegriff des unabhängigen Patentanspruches 1.

Eine derartige Fahrradbremse ist der GB-A-700 591 zu entnehmen. Bei diesem System ragt der Kolben des Geberzylinders, der von einem kappenartig nach außen gerichteten Organ gehalten ist, vom Geberzylinder ab und wird unmittelbar von dem Handgriff der Fahrradbremse beaufschlagt. Der doppelseitig wirkende Bremszylinder ist beidseits mit jeweils einer in ihrem Umfangsbereich eingeklemmten Membrane ausgestattet, welche auf der einen Seite einen hydraulikbeaufschlagten Druckraum begrenzt sowie anderseits an einen Kolben angrenzt, der einen aus dem Zylinder ragenden Druckstift trägt. Die beiden Druckstifte des doppelt wirkenden Bremszylinders greifen spreizend an einer Bremsschere an, welche ein Paar von Bremsschuhen trägt, die an beiden Seiten eines dazwischen umlaufenden Rades vorgesehen sind.

Eine andere Fahrradbremse nach CH-A-581 556 weist zwei einander gegenüberstehende Bremszylinder auf, welche also beidseits des Rades angreifen. Die Bremsbacken werden vom Flüssigkeitsdruck im Flüssigkeitsdrucksystem gegen die Rückholkraft einer Feder od.dgl. betätigt, wobei das Flüssigkeitsdrucksystem durch den Geberzylinder aktiviert wird.

Angesichts dieses Standes der Technik hat sich der Erfinder das Ziel gesetzt, eine Bremseinrichtung der eingangs erwähnten Art zu verbessern und eine völlige Leckagefreiheit zu gewährleisten. Darüber hinaus soll die Bremsvorrichtung von einfachem Aufbau sein und wenig Einzelteile benötigen.

Zur Lösung dieser Aufgabe führt die Lehre des unabhängigen Patentanspruches; ein einends geschlossener Hohlkörper aus elastischem Werkstoff liegt in seinem offenen Bereich im Geberzylinder so fest, daß sein Innenraum einen an den Handgriff anschließenden Druckbolzen od.dgl. aufnehmen und seine geschlossene Stirnwand einem gegen den Kraftspeicher abgestützten Kolben anliegen kann. Zudem soll der Innenraum des Bremszylinders mit einem -- bevorzugt gleichgeformt elastischen -- Hohlkörper ausgerüstet sein, in dessen Innenraum die Flüssigkeitsleitung mündet. Dieser Innenraum ist also mit Flüssigkeit beaufschlagt und schiebt bei zunehmendem Flüssigkeitsdruck mit seiner geschlossenen Stirnwand die Bremsbacke gegen die Gegenfläche am Rad.

Hier wird in bestechend einfacher Weise erreicht, daß mit i. w. einem einzigen Element das Problem der Flüssigkeitsdichtheit bei hydraulischen Fahrradbremsen gelöst wird. Beim Geberzylinder ist der Innenraum des Hohlkörpers nicht Teil des Flüssigkeitssystems, sondern Aufnahmeorgan für den vom Handgriff axial verschiebbaren Druckbolzen. Die Bremsflüssigkeit fließt im Geberzylinder außerhalb des Hohlkörpers in einen Zylinderraum, der die Druckfeder für die Rückführung des elastischen Hohlkörpers in die Ausgangslage enthält.

Beim Bremszylinder wiederum ist der Innenraum des Hohlkörpers, den man sich hutartig vorstellen kann, Teil des Flüssigkeitssystems, die dort vorhandene Rückholfeder liegt außerhalb des Flüssigkeitssystems und umgibt bevorzugt einen Montageschaft der Bremsbacke.

Weitere Merkmale der Erfindung sind den Unteransprüchen zu entnehmen.

Dank dieser Vorrichtung ist es nun möglich, exakt wirkende Bremsvorgange störungsfrei durchzuführen. Die erfindungsgemäße Bremsanlage ist kostengünstig, leicht zu warten und auch nachträglich an jede Art von Fahrrad -- mit oder ohne Hilfsmotor -- anzuschließen.

Von selbständig erfinderischer Bedeutung ist die Ausgestaltung einer Scheibenbremse nach den Ansprüchen 12 bis 14.

Außerdem liegt es im Rahmen der Erfindung, zwischen Radnabe und Scheibenbremse eine Rutschkupplung vorzusehen, welche ein Blockieren beim Bremsen verhindert.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:

Fig. 1: die skizzenhafte Seitenansicht eines Fahrrades mit Fahrradbremse;

Fig. 2: ein gegenüber Fig. 1 vergrößertes Detail der Fahrradbremse im teilweisen Längsschnitt;

Fig. 3: ein teilweise geschnittenes weiteres Detail;

Fig. 4: die Seitenansicht zu Fig. 3;

Fig. 5: einen Teil der Fig. 3 in vergrößertem Längsschnitt;

Fig. 6: die Draufsicht auf eine andere Ausführungsform zweier Bremszylinder an einem Fahrzeugreifen;

Fig. 7: eine Seitenansicht zu Fig. 6;

Fig. 8: ein Detail zu einem Ausführungsbeispiel, dargestellt gemäß Fig. 3;

Fig. 9,11: Frontansichten zu anderen Ausführungsformen einer Fahrradbremse;

Fig. 10,12: die teilweise geschnittenen Seitenansichten zu Fig. 9 bzw. 11.

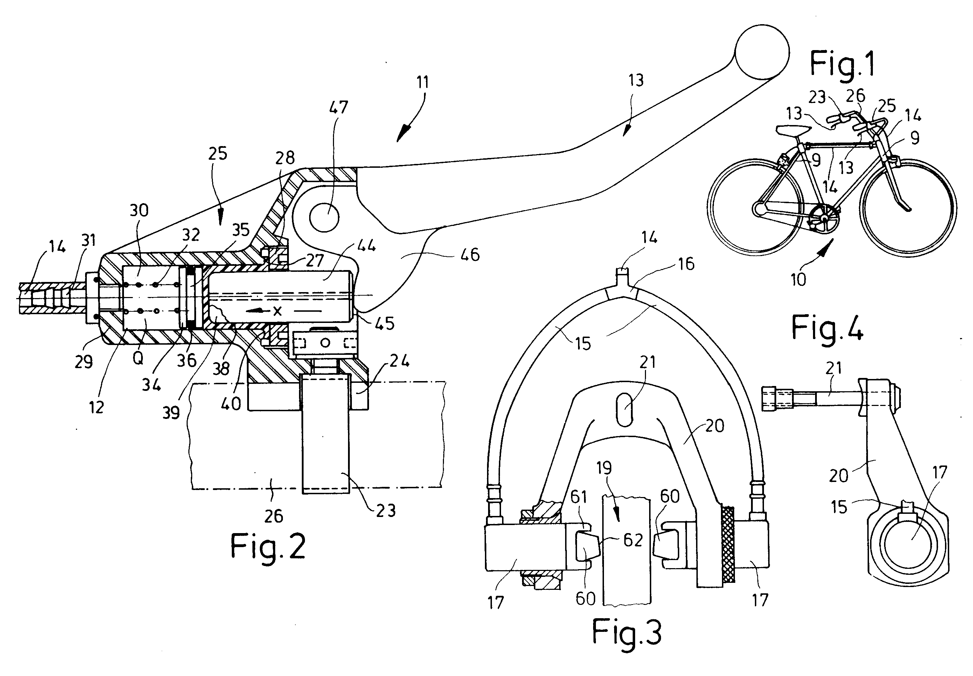

Eine Fahrradbremse 11 für ein in Fig. 1 skizziertes Fahrrad 10 besteht aus einem Geberzylinder 12 mit Handhebel 13, einer vom Geberzylinder 12 ausgehenden Bremsleitung 14 und einem Paar von Bremszylindern 17 beidseits eines bei 19 lediglich angedeuteten Rades eines aus Gründen der Übersichtlichkeit nicht weiter dargestellten Zweiradfahrzeuges.

Die Bremszylinder 17 sind mittels eines gabelartigen Halters 20 bei 21 an einen Teil einer Radgabel 9 od. dgl. angefügt und über Leitungsbogen 15 sowie ein T-Stück 16 an die Bremsleitung 14 angeschlossen. Der Geberzylinder 12 sitzt unter Zwischenschaltung einer Klemmschelle 23 mit einem Sockelstück 24 seines Zylindergehäuses 25 fest an einer bei 26 angedeuteten Lenkstange.

Der Geberzylinder 12 weist eine zylindrische Druckkammer 30 auf, in der sich eine Schraubenfeder 32 einends gegen eine Kammerstirnwand 29 abstützt und andernends einen Scheibenkolben 34 berührt. Dieser nimmt in einer Umfangsnut 35 einen 0-Ring 36 auf und schmiegt sich mit seiner der Schraubenfeder 32 abgekehrten Stirn an einen topfartigen Kunststoffeinsatz 38 aus elastischem Werkstoff an. Dieser ist mit einem krempenartigen Radialkragen 40 zwischen einer Ringschulter 27 des Zylindergehäuses 25 und einem Klemmring 28 festgelegt.

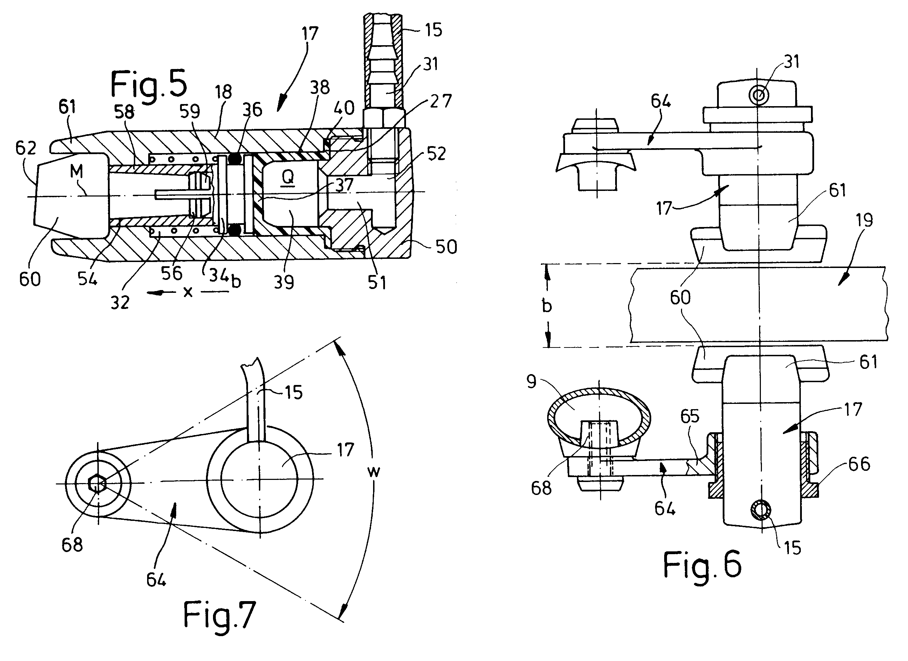

In Innenraum 39 des elastischen Kunststofftopfes 38 lagert ein Druckbolzen 44, an dessen freier Stirn 45 ein Nocken 46 des bei 47 drehbar gelagerten Handhebels 13 angreift. Bei dessen Betätigung wird der Druckbolzen 44 in Druckrichtung x geschoben und damit auch der Scheibenkolben 34. Dank des Kunststofftopfes 38 erfolgt der Ausschub der in der Druckkammer 30 befindlichen Bremsflüssigkeit Q in den Bremsschlauch 14 leckagefrei. Der Bremszylinder 17 ist gemäß Fig. 5 in einem Gehäuse 18 ebenfalls mit einem Kunststofftopf 38 ausgestattet, dessen Radialkragen 40 einer Ringschulter 27 des Gehäuses 18 anliegt und dort durch einen Schraubnippel 50 gehalten ist. Letzterer verbindet durch eine Winkelbohrung 51,52 den dichten Innenraum 39 des Kunststofftopfes 38 mit einem Schlauchstutzen 31 für die Leitung 15.

Es ist erkennbar, daß hier die Bremsflüssigkeit Q bei Betätigung des Geberzylinders 12 den Scheibenkolben $34_b$ gegen eine hohle Kolbenstange 54 drückt. Diese ist mit einer Innenkonusfläche und einer Ringschulter 56 als Aufnahmehülse für einen geschlitzten Konusstift 58 mit radial schulterartig vorspringendem Klemmende 59 ausgebildet. Der Konusstift 58 ist Steckteil eines Bremsschuhes 60, der dank der widerhakenartigen Klemmpaarung 57/59 austauschbar festliegt.

Der Gemäß Fig. 5 stegartige Bremsschuh 60 wird von Seitenzungen 61 des Gehäuses 18 beidseits übergriffen und ist mit einer zur Zylinderachse M geneigten Bremsfläche 62 versehen.

Gemäß Fig. 6 stehen einander zwei Bremsschuhe 60 mit einem mittleren Abstand b ihrer Bremsflächen 62 gegenüber und sind in Zylinderhaltern 64 mittels jeweils einer Schraubbüchse 66 zueinander abstandsveränderlich festgelegt. In diesem Ausführungsbeispiel endet ein stegartiger Arm 65 des Zylinderhalters 64 an einer Seitenfläche der hier querschnittlich angedeuteten Radgabel 9, an welcher der Zylinderhalter 64 bei 68 festgeschraubt ist.

Diese Ausbildung gestattet es, den Zylinderhalter 64 in einem Winkel w von etwa 60° zu verschwenken und anschliessend wieder festzulegen, was die Justierung der Bremszylinder 17 erheblich vereinfacht.

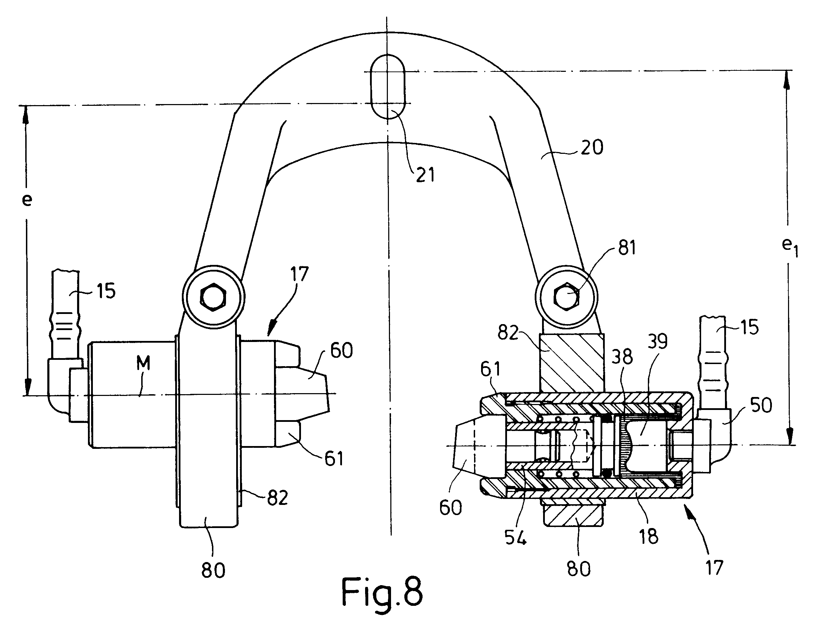

Dank der in Fig. 8 gezeigten Konstruktion können die Bremszylinder 17 am Fahrrad 10 problemlos um zumindest 50 mm und höchstens 70 mm (Maß e, $e_1$) verstellt werden. Sie sitzen jeweils in einer am Halter 20 in Lagern 80 drehbar verstellbaren Exzenterscheiben 82. Deren Lage ist durch Betätigung eines Lagerverschlusses 81 zu fixieren.

Das gesamte beschriebene Bremssystem ist -- wie gesagt --leckagefrei, da die Bremsflüssigkeit auch in den Bremszylindern 17 nicht ungewollt auszutreten vermag. Sie füllt den Innenraum 39 des Kunststofftopfes 38, dessen Stirnfläche 37 durch die Bremsflüssigkeit Q in Richtung x gedrückt wird. Dabei wandert in Fig. 5 der Scheibenkolben $34_b$ nach links und schiebt den Bremsschuh 60 aus. Dieser wird bei Verminderung des Druckes der Bremsflüssigkeit durch die Schraubenfeder 32 ebenso zurückgeholt wie dies mit dem Scheibenkolben 34 in Fig. 2 geschieht.

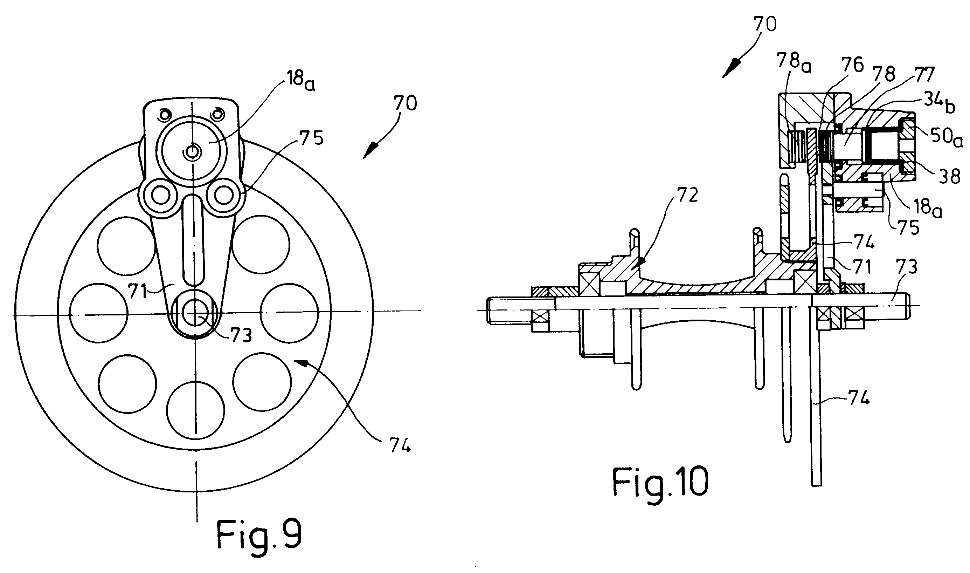

Dieses beschriebene leckagefreie System läßt sich selbstverständlich auch bei Scheibenbremsen 70 anwenden, die in Fig. 9, 10 an einer Radnabe 72 einer Radachse 73 angeordnet sind. Die Bremsscheibe 74 durchwandert einen Spalt 76 zwischen der beschriebenen beweglichen Bremsbacke 78 und einer koaxial gegenüberliegenden ortsfesten Bremsbacke $78_a$. Die bewegliche Bremsbacke 78 ist hier an einem Axialstift 77 des Scheibenkolbens $34_b$ angeschlossen, der aus einem Gehäuse $18_a$ herausragt. Letzteres umschließt in beschriebener Weise einen Kunststofftopf 38, der durch eine Verschraubung $50_a$ gehalten wird -an letztere schließt die Bremsleitung 14, 15 an.

Es handelt sich um eine sog. Schwimmsattelbremse mit schwimmenden Bremselementen 78, $78_a$; beim Bremsvorgang werden die koaxialen Bremsbacken 78, $78_a$ zangenartig zusammengezogen und halten zwischen sich die Bremsscheibe 74 fest. Das Gehäuse 18a ist mittels eines Haltearms 71 festgelegt, mit 75 ist eine Bolzenhalterung bezeichnet.

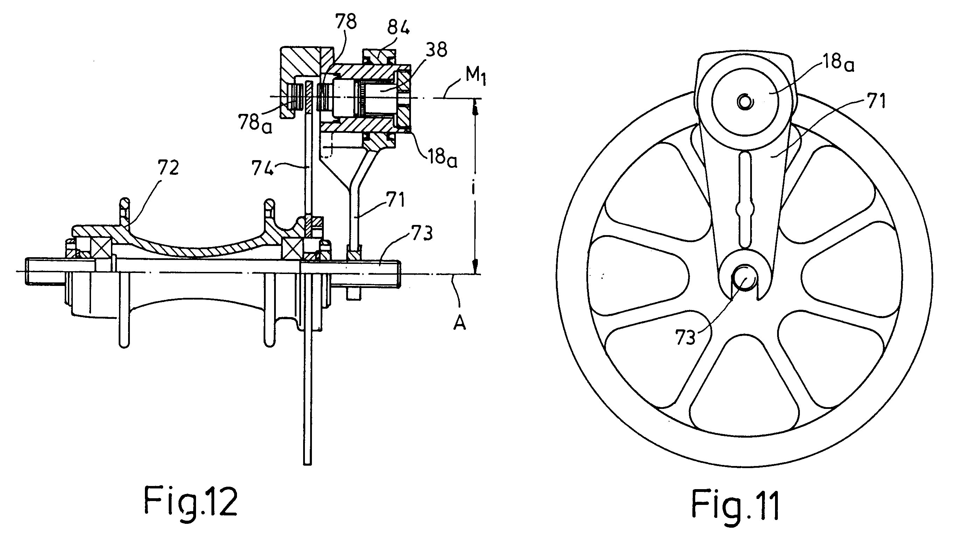

Beim Ausführungsbeispiel der Fig. 11, 12 ist der Haltearm 71 ohne Bolzenhalterung und nimmt das Gehäuse $18_a$ in einem Lagerrahmen 84 in einem Abstand i von 65 mm von der Achse A auf. Dieser Haltearm 71 hat den Vorzug einer günstigen Einstellbarkeit.

Außerdem ist vorgesehen, zwischen Bremsscheibe 74 und Nabe 72 eine Rutschkupplung zur Verhinderung der Blokkierung anzuordnen.

**Patentansprüche**

1. Fahrradbremse mit wenigstens einem mit einem Handgriff verbundenen Geberzylinder und zumindest einem daran durch eine Flüssigkeitsleitung angeschlossenen, eine Bremsbakke betätigenden Bremszylinder, wobei die Flüssigkeitsleitung beidends in einem volumenveränderlichen Raum mündet, der im Geberzylinder vorgesehene Raum durch ein vom Handgriff betätigbares Organ gegen einen Kraftspeicher verkleinerbar ist sowie Geber- und Bremszylinder jeweils mit einem Kolbenelement versehen sind,
gekennzeichnet
durch einen einends geschlossenen sowie andernends im Geberzylinder (12) festliegenden Hohlkörper (38) aus elastischem Werkstoff, dessen Innenraum (39) einen an den Handgriff (13) anschließenden Druckbolzen (44) od.dgl. aufnimmt und dessen geschlossene Stirnwand (37) einem gegen den Kraftspeicher (32) abgestützten Kolben (34) der verkleinerbaren dichten Druckkammer (30) des Geberzylinders anliegt, und/oder durch einen einends geschlossenen sowie andernends im Bremszylinder (17) mittels eines Radialkragens (40) festliegenden einends geschlossenen topfartigen Hohlkörper (38) aus elastischem Werkstoff, dessen Innenraum (39) druckdicht an die Flüssigkeitsleitung (14, 15) angeschlossen ist, wobei die geschlossene Stirnwand (38) des Hohlkörpers die Bremsbacke (60) mit Bremskraft beaufschlagt.

2. Fahrradbremse nach Anspruch 1, dadurch gekennzeichnet, daß der Hohlkörper (38) des Geberzylinders (12) als Hohlzylinder mit am offenen Zylinderende vorgesehenem Radialkragen (40) ausgebildet ist.

3. Fahrradbremse nach Anspruch 1 oder 2, dadurch gekennzeichnet, daß der Hohlkörper (38) mit seinem Radialkragen (40) zwischen einer Ringschulter (27) des Zylindergehäuses (18, 25) einerseits und einem Klemmring (28) andererseits festgelegt ist.

4. Fahrradbremse nach einem der Ansprüche 1 bis 3, dadurch gekennzeichnet, daß der Kolben (34) als Scheibenkolben mit Umfangsnut (35) für einen 0-Ring (36) ausgebildet ist.

5. Fahrradbremse nach einem der Ansprüche 1 bis 4, dadurch gekennzeichnet, daß sich zwischen Kolben (34) sowie einem schulterartigen Teil des Zylindergehäuses (18, 25) eine Schraubenfeder (32) als Kraftspeicher erstreckt, wobei die Schraubenfeder (32) des Bremszylinders (17) gegebenenfalls einen Hohlschaft (48) od.dgl. umgibt, der widerhakenartige Organe als Klemmittel für einen eingeschobenen Konusstift (58) der Bremsbacke (60) aufweist.

6. Fahrradbremse nach wenigstens einem der Ansprüche 1 bis 5, dadurch gekennzeichnet, daß der Bremszylinder (17) axial einstellbar in einem dazu radialen Zylinderhalter (64) sitzt und letzterer schwenkbar mit dem Fahrradrahmen verbunden ist, wobei gegebenenfalls der Schwenkwinkel (w) etwa 60° in einer etwa vertikalen Ebene beträgt.

7. Fahrradbremse nach wenigstens einem der Ansprüche 1 bis 6, dadurch gekennzeichnet, daß der Bremszylinder (17) in einer drehbaren Exzenterscheibe (82) und zu deren Hauptachse achsparallel vorgesehen ist, wobei gegebenenfalls die Exzenterscheibe (82) in einem U-förmigen Halter (20) festlegbar lagert und etwa parallel zum benachbarten Rad (19) verläuft.

8. Fahrradbremse nach wenigstens einem der Ansprüche 1 bis 7, dadurch gekennzeichnet, daß der Hohlkörper (38) des Bremszylinders (17) einer rechtwinklig zur Scheibenebene nahe der Scheibenkante angreifenden Bremsbacke (78) einer Scheibenbremse (70) zugeordnet ist, wobei die Bremsbacke gegebenenfalls Teil eines schwimmenden Bremsbackenpaares (78, 78a) ist, zwischen dem die Bremsscheibe (74) verläuft.

9. Fahrradbremse nach Anspruch 8, dadurch gekennzeichnet, daß der Bremszylinder (17) an einem armartigen Halter (71) angebracht und dieser fest mit einem Achsbolzen (73) verbunden ist.

10. Fahrradbremse nach Anspruch 8 oder 9, dadurch gekennzeichnet, daß zwischen der Fahrradnabe (72) und der Bremsscheibe (74) eine Rutschkupplung vorgesehen ist.

**Claims**

1. Bicycle brake comprising at least one master cylinder connected to a hand lever and at least one brake cylinder actuating a brake shoe connected thereto by a hydraulic line, the hydraulic line opening at both ends into a space of variable volume, the space provided in the master cylinder being reducible by a member actuated by the hand lever against an energy storage mechanism and the master cylinder and the brake cylinder each being provided with a piston element, characterised by a hollow body (38) of elastic material closed at one end and fixed at the other end in the master cylinder (12), the inner space (39) of which receives a push-rod (44) or the like connected to the hand lever (13) and the closed end wall (37) of which lies adjacent to a piston (34) of the reducible tight pressure chamber (30) of the master cylinder supported against the energy storage mechanism (32), and/or by a cup-shaped hollow body (38) of elastic material closed at one end and fixed at the other end in the brake cylinder (17) by means of a radial collar (40), the inner space (39) of which is connected in a pressure-tight manner to the hydraulic line (14, 15), the closed end wall (38) of the hollow body applying braking force to the brake shoe (60).

2. Bicycle brake according to claim 1, characterised in that the hollow body (38) of the master cylinder (12) is a hollow cylinder having a radial collar (40) provided at the open end of the cylinder.

3. Bicycle brake according to claim 1 or claim 2, characterised in that the hollow body (38) is fixed via its radial collar (40) between an annular shoulder (27) of the cylindrical housing (18, 25) on the one hand and a clamping ring (28) on the other hand.

4. Bicycle brake according to one of claims 1 to 3, characterised in that the piston (34) is a disc piston having a circumferential groove (35) for an O-ring (36).

5. Bicycle brake according to one of claims 1 to 4, characterised in that a helical spring (32) extends as an energy storage mechanism between the piston (34) and a shoulder-like part of the cylindrical housing (18, 25), the helical spring (32) of the brake cylinder (17) optionally surrounding a hollow shaft (48) or the like having hooklike members as clamping means for an inserted conical pin (58) of the brake shoe (60).

6. Bicycle brake according to at least one of claims 1 to 5, characterised in that the brake cylinder (17) is axially adjustable in a cylindrical holder (64) radial thereto and the latter is pivotally connected to the bicycle frame, the pivot angle (w) optionally being approximately 60° in an approximately vertical plane.

7. Bicycle brake according to at least one of claims 1 to 6, characterised in that the brake cylinder (17) is provided in a rotatable eccentric disc (82) and axially parallel to the main axis thereof, the eccentric disc (82) optionally being fixedly mounted in a U-shaped holder (20) and extending approximately parallel to the adjacent wheel (19).

8. Bicycle brake according to at least one of claims 1 to 7, characterised in that the hollow body (38) of the brake cylinder (17) is associated with a brake shoe (78) of a disc brake (70) engaging at a right angle to the disc plane close to the disc edge, the brake shoe optionally being part of a floating brake shoe pair (78, 78$_a$) between which the brake disc (74) extends.

9. Bicycle brake according to claim 8, characterised in that the brake cylinder (17) is fitted to an arm-like holder (71) and that this is fixedly connected to an axle bolt (73).

10. Bicycle brake according to claim 8 or claim 9, characterised in that a friction clutch is provided between the bicycle wheel hub (72) and the brake disc (74).

**Revendications**

1. Frein de bicyclette comportant au moins un maître-cylindre relié à une poignée et au moins un cylindre de frein raccordé au maître-cylindre par une conduite hydraulique et actionnant une mâchoire de frein, la conduite hydraulique débouchant à chacune de ses extrémités dans un éspace à volume variable, l'espace prévu dans le maître-cylindre étant réductible par un organe actionnable par la poignée contre un accumulateur d'énergie, et le maître-cylindre et le cylindre de frein étant pourvus chacun d'un élément formant piston, **caractérisé** par un corps creux (38) en matériau élastique, qui est fermé à une extrémité et fixé à l'autre extrémité dans le maître-cylindre (12), dont l'espace intérieur (39) reçoit un goujon de pression (44) ou analogue raccordé à le poignée (13), et dont la paroi frontale fermée (37) est adjacente à un piston (34) de la chambre de pression étanche réductible (30) du maître-cylindre, ce piston étant en appui contre l'accumulateur d'énergie (32), et/ou par un corps creux (38) en matériau élastique, en forme de pot, fermé à une extrémité et fixé à l'autre extrémité dans le cylindre de frein (17) au moyen d'une collerette radiale (40), l'espace intérieur (39) de ce corps creux étant relié d'une manière étanche à le pression à la conduite hydraulique (14, 15), et le face frontale fermée (38) de celui-ci fournissent à la mâchoire de frein (60) la force de freinage.

2. Frein de bicyclette conforme à la revendication 1, caractérisé en ce que le corps creux (38) du maître-cylindre (12) est conformé comme un cylindre creux avec une collerette radiale (40) prévue à l'extrémité ouverte du cylindre.

3. Frein de bicyclette conforme à l'une des revendications 1 ou 2, caractérisé en ce que le corps creux (38) pourvu de sa collerette radiale (40) est fixé entre un épaulement annulaire (27) du carter (18, 25) du cylindre d'une part et une bague de blocage (28) d'autre part.

4. Frein de bicyclette conforme à l'une des revendications 1 à 3, caractérisé en ce que le piston (34) est conformé comme un piston en forme de disque pourvu d'une rainure périphérique (35) destinée à recevoir un joint torique (36).

5. Frein de bicyclette conforme à l'une des revendications 1 à 4, caractérisé en ce qu'entre le piston (34) et une partie formant épaulement dans le carter (18, 25) du cylindre s'étend un ressort cylindrique (32) formant accumulateur d'énergie, ledit ressort cylindrique (32) du cylindre de frein (17) entourant le cas échéant une tige creuse (48) ou analogue qui présente des organes du type crochet servant de moyens de blocage d'une broche conique (58) de la mâchoire de frein (60) qui est introduite dans cette tige.

6. Frein de bicyclette conforme à l'une au moins des revendications 1 à 5, caractérisé en ce que le cylindre de frein (17) est logé, de manière réglable en direction axiale, dans un porte-cylindre (64) radial par rapport à lui, et en ce que le porte-cylindre (64) est monté pivotant sur le cadre de la bicyclette, l'angle de pivotement (w) étant éventuellement d'environ 60° dans un plan sensiblement vertical.

7. Frein de bicyclette conforme à l'une au moins des revendications 1 à 6, caractérisé en ce que le cylindre de frein (17) est monté dans un disque rotatif à excentrique (82), son axe étant parallèle à l'axe principal de ce dernier, le disque rotatif à excentrique (82), le cas échéant, étant logé dans un support (20) en forme de U dans lequel il peut être fixé et se déplaçant sensiblement parallèlement à la roue voisine (19).

8. Frein de bicyclette conforme à l'une au moins des revendications 1 à 7, caractérisé en ce que le corps creux (38) du cylindre de frein (17) est associé à une mâchoire de frein (78) d'un frein à disque (70), cette mâchoire agissant perpendiculairement au plan du disque à proximité du bord du disque, et faisant éventuellement partie d'une paire flottante de mâchoires de frein (78, 78$_a$) entre lesquelles se déplace le disque de frein (74).

9. Frein de bicyclette conforme à la revendication 8, caractérisé en ce que le cylindre de frein (17) est monté sur un support (71) formant bras et en ce que ce dernier est fixé sur un axe (73).

10. Frein de disque conforme à l'une des revendications 8 ou 9, caractérisé en ce qu'entre le moyeu (72) de la roue de bicyclette et le disque de frein (74) est prévu un accouplement à friction.

Fig.1

Fig.2

Fig.3

Fig.4

EP 0 285 958 B1

Fig. 6

Fig. 5

Fig. 7

Fig.8

Fig.9

Fig.10

EP 0 285 958 B1

Fig.11

Fig.12